(19) Europäisches Patentamt
European Patent Office
Office européen des brevets

(11) **EP 4 650 763 A1**

(12) **EUROPEAN PATENT APPLICATION**
published in accordance with Art. 153(4) EPC

(43) Date of publication:
**19.11.2025 Bulletin 2025/47**

(21) Application number: **24760245.1**

(22) Date of filing: **15.02.2024**

(51) International Patent Classification (IPC):
*G01N 23/223* (2006.01)

(52) Cooperative Patent Classification (CPC):
**G01N 23/223**

(86) International application number:
**PCT/JP2024/005271**

(87) International publication number:
**WO 2024/176944 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023 JP 2023027360**

(71) Applicant: **Rigaku Corporation
Akishima-shi
Tokyo 196-8666 (JP)**

(72) Inventors:
• **HARA, Shinya
Takatsuki-shi, Osaka 569-1146 (JP)**
• **YAMADA, Yasujiro
Takatsuki-shi, Osaka 569-1146 (JP)**
• **MARUKO, Yuri
Takatsuki-shi, Osaka 569-1146 (JP)**

(74) Representative: **Dr. Gassner & Partner mbB
Wetterkreuz 3
91058 Erlangen (DE)**

(54) **X-RAY FLUORESCENCE SPECTROMETER**

(57)    In an automatic setting by an X-ray fluorescence spectrometer of the present invention, overlap correction coefficients are limited to negative values, and absorption/excitation correction coefficients are such that, in a case where standard samples do not contain components capable of exciting analytical lines, the absorption/excitation correction coefficients for all correction components are limited to positive values, theoretical intensities of fluorescent X-rays to be generated from samples of which compositions have been assumed are calculated, theoretical matrix correction coefficients are obtained on the basis of the theoretical intensities, and a numerical value obtained by multiplying each theoretical matrix correction coefficient by a predetermined number is, in a case of a positive numerical value, set as an upper limit value of the absorption/excitation correction coefficient or is, in a case of a negative numerical value, set as a lower limit value of the absorption/excitation correction coefficient, to perform multiple regression calculation.

Fig. 1

EP 4 650 763 A1

**Description**

CROSS REFERENCE TO THE RELATED APPLICATION

This application is based on and claims Convention priority to Japanese patent application No. 2023-027360, filed February 24, 2023, the entire disclosure of which is herein incorporated by reference as a part of this application.

BACKGROUND OF THE INVENTION

(Field of the Invention)

The present invention relates to an X-ray fluorescence spectrometer that irradiates a sample with primary X-rays and that obtains, on the basis of measured intensities of fluorescent X-rays generated through the irradiation, a content of each component in the sample by a quantification unit in which a calibration curve method that involves performing absorption/excitation correction and overlap correction is employed or a fundamental parameter method that includes overlap correction is employed.

(Description of Related Art)

Conventionally, X-ray fluorescence spectrometers that perform quantitative analysis are roughly classified into: X-ray fluorescence spectrometers that perform quantitative analysis based on a calibration curve method; and X-ray fluorescence spectrometers that perform quantitative analysis based on a fundamental parameter method (also written as "FP method"). In the quantitative analysis based on the calibration curve method, in order to analyze an unknown sample, a set of standard samples in which contents (also written as "concentrations") of components are known is used to obtain a calibration curve as a correlation between the content of each of the components and the measured intensity of fluorescent X-rays (measurement line) from a measurement element corresponding to the component. The component is an element or a compound. When the component is an element, the element itself is the measurement element corresponding to the component, and meanwhile, when the component is a compound, an element representing the compound is the measurement element corresponding to the component (see, for example, Patent Document 1 (paragraph [0002])).
In the quantitative analysis based on the calibration curve method, absorption/excitation correction (also written as "matrix correction") related to absorption/excitation due to a coexisting element and overlap correction related to overlapping of interfering lines are sometimes performed in addition to background correction related to a background (see, for example, Patent Document 1 (paragraph [0003]) for absorption/excitation correction). At the time of creating the calibration curve expressed with, for example, the following equation (1), absorption/excitation correction coefficients and overlap correction coefficients for these corrections are obtained through multiple regression calculation together with calibration curve constants on the basis of measured intensities and known contents of components regarding standard samples such that the accuracy of the calibration curve becomes favorable (see, for example, Patent Document 1 (paragraphs [0006] to [0014]) for accuracy).

$$W_i = (AI_i^3 + BI_i^2 + CI_i + D)(1 + \Sigma_j M_{ij} I_j) + \Sigma_j O_{ij} I_j \cdots (1)$$

$W_i$: content
I: measured intensity
A, B, C, D: calibration curve constants
i: analytical component
j: absorption/excitation correction component or overlap correction component
$M_{ij}$: absorption/excitation correction coefficient of component j with respect to component i
$O_{ij}$: overlap correction coefficient of component j with respect to component i

Meanwhile, in the quantitative analysis based on the FP method, a theoretical intensity of fluorescent X-rays generated from each of components in a sample is calculated on the basis of respective assumed contents of the components, and the respective assumed contents of the components are corrected and calculated through successive approximation such that the theoretical intensity matches a post-conversion measured intensity obtained by converting a measured intensity measured by a detection unit into a theoretical intensity scale. Consequently, a content of the component in the sample is calculated. Here, in order to analyze an unknown sample, a set of standard samples in which contents of components are known is used to obtain an instrument sensitivity curve as a correlation between a measured intensity and a theoretical intensity calculated on the basis of each of the known contents (see, for example, Patent Document 2 (paragraph [0003] and Fig. 4) and Patent Document 1 (paragraph [0009])).

In the quantitative analysis based on the FP method, in principle, absorption/excitation correction is performed on all the components, and as necessary, overlap correction is also performed for some of the components in the instrument sensitivity curve expressed with, for example, the following equation (2) (see, for example, Patent Document 2 (paragraphs [0069] to [0074]) for absorption/excitation correction). At the time of creating the instrument sensitivity curve, overlap correction coefficients for this correction are obtained through multiple regression calculation together with instrument sensitivity constants on the basis of measured intensities and theoretical intensities based on known contents of components regarding standard samples such that the accuracy of the instrument sensitivity curve becomes favorable.

$$I_{Ti}=aI_i^3+bI_i^2+cI_i+d+\Sigma_j o_{ij}I_j \cdots (2)$$

$I_T$: theoretical intensity
I: measured intensity
a, b, c, d: instrument sensitivity constants
i: analytical component
j: overlap correction component
$o_{ij}$: overlap correction coefficient of component j with respect to component i

[Related Document]

[Patent Document]

| [Patent Document 1] | JP Laid-open Patent Publication No. 2021-51053 |
| [Patent Document 2] | WO2018/168939 |
| [Patent Document 3] | JP Laid-open Patent Publication No. 2000-65765 |

SUMMARY OF THE INVENTION

However, when the correction coefficients are, without imposing any particular limitation, obtained through multiple regression calculation such that the accuracy of the calibration curve or the instrument sensitivity curve becomes favorable, the following problem arises. That is, in a case where, for example, inappropriate sample preparation is performed for standard samples, a physically impossible overlap correction coefficient (positive overlap correction coefficient) that causes an overlap intensity of an interfering line to become negative is sometimes obtained. As a matter of course, accurate analysis cannot be performed with use of such a calibration curve or instrument sensitivity curve.

The present invention has been made in view of the above conventional problem, and an object of the present invention is to provide an X-ray fluorescence spectrometer that obtains a content of each component in a sample by a quantification unit in which a calibration curve method that involves performing absorption/excitation correction and overlap correction is employed or a fundamental parameter method that includes overlap correction is employed, the spectrometer enabling prevention of a physically impossible correction coefficient from being obtained at the time of obtaining correction coefficients through multiple regression calculation.

To achieve the object, a first configuration of the present invention is, firstly, an X-ray fluorescence spectrometer including a quantification unit in which a calibration curve method that involves performing absorption/excitation correction and overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation. In addition, the quantification unit obtains calibration curve constants, absorption/excitation correction coefficients and overlap correction coefficients through multiple regression calculation on the basis of measured intensities and known contents of components regarding standard samples, with, in a case of manual setting, whether or not to limit the overlap correction coefficients to negative values being selected, and whether or not to limit the absorption/excitation correction coefficients for all correction components to positive values being selected, to perform multiple regression calculation.

Meanwhile, the quantification unit is as follows in a case of automatic setting. That is, the overlap correction coefficients are limited to negative values, and the absorption/excitation correction coefficients are such that, in a case where the standard samples do not contain components capable of exciting analytical lines, the absorption/excitation correction coefficients for all the correction components are limited to positive values, theoretical intensities of fluorescent X-rays to be generated from a plurality of samples of which compositions have been assumed are calculated, theoretical matrix correction coefficients are obtained through calculation on the basis of the theoretical intensities, and a numerical value obtained by multiplying each of the theoretical matrix correction coefficients by a predetermined number is, in a case of a positive numerical value, set as an upper limit value of said absorption/excitation correction coefficient or is, in a case of a negative numerical value, set as a lower limit value of said absorption/excitation correction coefficient, to perform multiple regression calculation.

In the X-ray fluorescence spectrometer according to the first configuration, the quantification unit obtains the correction coefficients through multiple regression calculation by appropriately imposing limitation, whereby a physically impossible correction coefficient can be prevented from being obtained.

A second configuration of the present invention is, firstly, an X-ray fluorescence spectrometer including a quantification unit in which a fundamental parameter method that includes overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation. In addition, the quantification unit obtains instrument sensitivity constants and overlap correction coefficients through multiple regression calculation on the basis of measured intensities and known contents of components regarding standard samples, with, in a case of manual setting, whether or not to limit the overlap correction coefficients to negative values being selected, to perform multiple regression calculation, and, in a case of automatic setting, the overlap correction coefficients being limited to negative values, to perform multiple regression calculation.

In the X-ray fluorescence spectrometer according to the second configuration as well, the quantification unit obtains the correction coefficients through multiple regression calculation by appropriately imposing limitation, whereby a physically impossible correction coefficient can be prevented from being obtained.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of a preferred embodiment thereof, when taken in conjunction with the accompanying drawing. However, the embodiment and the drawing are given only for the purpose of illustration and explanation, and are not to be taken as limiting the scope of the present invention in any way whatsoever, which scope is to be determined by the appended claims. In the accompanying drawing, like reference numerals are used to denote like parts throughout the several views, and:

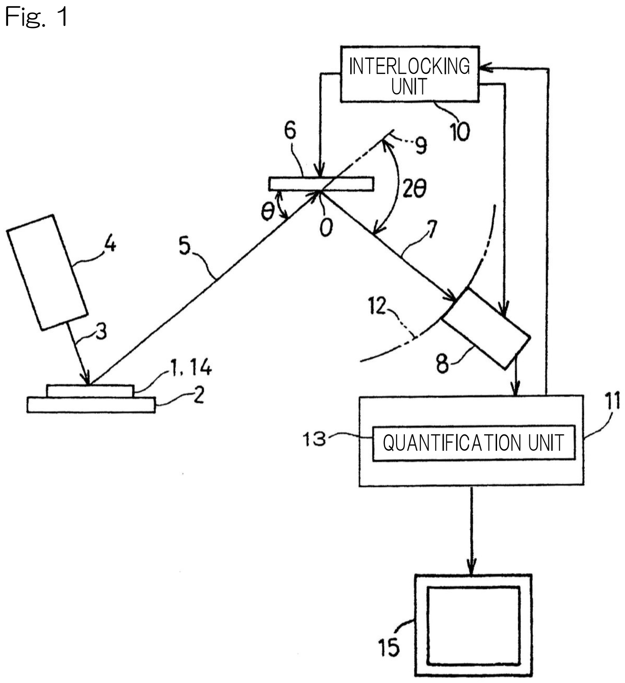

Fig. 1 is a schematic diagram showing an X-ray fluorescence spectrometer according to an embodiment of the present invention.

DESCRIPTION OF EMBODIMENTS

Hereinafter, an X-ray fluorescence spectrometer according to an embodiment of the present invention will be described. As shown in Fig. 1, the X-ray fluorescence spectrometer according to the present embodiment is a sequential X-ray fluorescence spectrometer that irradiates a sample 1, 14 (including both an unknown sample 1 and a standard sample 14) with primary X-rays 3 and that measures intensities of secondary X-rays 5 generated through the irradiation. The X-ray fluorescence spectrometer includes: a sample stage 2 on which the sample 1, 14 is placed; an X-ray source 4 (such as an X-ray tube) which irradiates the sample 1, 14 with the primary X-rays 3; a spectroscopic device 6 which monochromates the secondary X-rays 5 (such as fluorescent X-rays) generated from the sample 1, 14; and a detector 8 on which secondary X-rays 7 obtained through the monochromation by the spectroscopic device 6 are incident and which detects intensities of the secondary X-rays 7. An output of the detector 8 is input through an amplifier, a pulse height analyzer, a counting unit, and the like which are not shown, to a controller 11 (such as a computer) for controlling the entire spectrometer.

The X-ray fluorescence spectrometer according to the present embodiment is a wavelength dispersive and sequential X-ray fluorescence spectrometer and includes an interlocking unit 10 (i.e., so-called goniometer) which interlocks the spectroscopic device 6 and the detector 8 so as to change the wavelengths of the secondary X-rays 7 to be incident on the detector 8. When the secondary X-rays 5 are incident on the spectroscopic device 6 at a certain incident angle $\theta$, an extension line 9 of the secondary X-rays 5 and the secondary X-rays 7 obtained through the monochromation (diffraction) by the spectroscopic device 6 form a spectroscopic angle $2\theta$ which is 2 times the incident angle $\theta$. The interlocking unit 10 rotates the spectroscopic device 6 about an axis O passing through the center of a surface of the spectroscopic device 6 and perpendicular to the drawing sheet and rotates the detector 8 around the axis O along a circle 12 by an angle that is 2 times the angle of the rotation of the spectroscopic device 6 such that: the spectroscopic angle $2\theta$ is

changed so as to change the wavelengths of the secondary X-rays 7 to be obtained through the monochromation; and the secondary X-rays 7 obtained through the monochromation are incident on the detector 8. The value of the spectroscopic angle $2\theta$ ($2\theta$ angle) is input from the interlocking unit 10 to the controller 11. In the present invention, the X-ray fluorescence spectrometer may be a wavelength dispersive and simultaneous multi-elements analysis type X-ray fluorescence spectrometer or may be an energy dispersive X-ray fluorescence spectrometer.

The X-ray fluorescence spectrometer according to the present embodiment includes a quantification unit 13 as a program installed in the controller 11 and obtains, on the basis of measured intensities of the fluorescent X-rays 5, contents of components in the sample 1, 14 by the quantification unit 13 in which a calibration curve method that involves performing absorption/excitation correction and overlap correction is employed. The quantification unit 13 obtains calibration curve constants A, B, C and D, absorption/excitation correction coefficients $M_{ij}$ and overlap correction coefficients $O_{ij}$, for example, in the aforementioned equation (1) through multiple regression calculation on the basis of measured intensities and known contents of components regarding the standard samples 14, with, in a case of manual setting, whether or not to limit the overlap correction coefficients $O_{ij}$ to negative values being selected, and whether or not to limit the absorption/excitation correction coefficients $M_{ij}$ for all correction components j to positive values being selected, to perform multiple regression calculation.

In the case of manual setting, for example, a message indicating that "positive overlap correction is allowed" is displayed together with a checkbox on a displaying unit 15 (such as a liquid crystal display) connected to the controller 11. In this case, when an operator checks off the checkbox by using an input unit such as a mouse (not shown), selection is performed such that the overlap correction coefficients $O_{ij}$ are not limited to negative values. Meanwhile, in a default state where the checkbox is not checked off, selection is performed such that the overlap correction coefficients $O_{ij}$ are limited to negative values.

In addition, a message indicating that "only absorption correction is allowed" is displayed together with a checkbox on the displaying unit 15. In this case, when an operator checks off the checkbox by using the input unit, selection is performed such that the absorption/excitation correction coefficients $M_{ij}$ for all the correction components j are limited to positive values. Meanwhile, in a default state where the checkbox is not checked off, selection is performed such that excitation correction is also allowed without imposing such limitation. Then, the quantification unit 13 performs multiple regression calculation in accordance with the limitations based on these selections. The reason why the checking-off of the checkboxes makes it possible to perform selection so as not to limit the overlap correction coefficients $O_{ij}$ to negative values and makes it possible to perform selection so as to limit the absorption/excitation correction coefficients $M_{ij}$ for all the correction components j to positive values, is because such analysis is sometimes desired by existing users of X-ray fluorescence spectrometers.

Meanwhile, the quantification unit 13 is as follows in a case of automatic setting. That is, the overlap correction coefficients $O_{ij}$ are limited to negative values, and the absorption/excitation correction coefficients $M_{ij}$ are such that, in a case where the standard samples 14 do not contain components capable of exciting analytical lines, the absorption/excitation correction coefficients $M_{ij}$ for all the correction components j are limited to positive values, theoretical intensities of fluorescent X-rays to be generated from a plurality of samples of which compositions have been assumed are calculated, theoretical matrix correction coefficients are obtained through calculation on the basis of the theoretical intensities, and a numerical value obtained by multiplying each of the theoretical matrix correction coefficients by a predetermined number is, in a case of a positive numerical value, set as an upper limit value of said absorption/excitation correction coefficient $M_{ij}$ or is, in a case of a negative numerical value, set as a lower limit value of said absorption/excitation correction coefficient $M_{ij}$, to perform multiple regression calculation.

For example, a message indicating that "variable upper and lower limit values are automatically set" is displayed together with a checkbox on the displaying unit 15. In this case, when an operator checks off the checkbox by using the input unit, automatic setting is made such that the quantification unit 13 limits the overlap correction coefficients $O_{ij}$ to negative values.

For the absorption/excitation correction coefficients $M_{ij}$, the quantification unit 13 refers to a prestored library related to absorption and excitation between elements first. Then, in a case where the standard samples 14 do not contain components capable of exciting analytical lines, the absorption/excitation correction coefficients $M_{ij}$ for all the correction components j are limited to positive values. Then, in the same manner as in a publicly-known semi-fundamental parameter method, theoretical intensities of fluorescent X-rays to be generated from a plurality of samples of which compositions have been assumed are calculated, and theoretical matrix correction coefficients are obtained through calculation on the basis of the theoretical intensities. Furthermore, a numerical value obtained by multiplying each of the theoretical matrix correction coefficients by a predetermined number (e.g., 10) is, in a case of a positive numerical value, set as an upper limit value of said absorption/excitation correction coefficient $M_{ij}$ or is, in a case of a negative numerical value, set as a lower limit value of said absorption/excitation correction coefficient $M_{ij}$, to perform multiple regression calculation.

In the X-ray fluorescence spectrometer according to the present embodiment, the quantification unit 13 obtains the overlap correction coefficients $O_{ij}$ and the absorption/excitation correction coefficients $M_{ij}$ through multiple regression calculation by appropriately imposing limitation, whereby a physically impossible correction coefficient such as an overlap correction coefficient (positive overlap correction coefficient) that causes an overlap intensity of an interfering line to become negative or an absorption/excitation correction coefficient that leads to generation of an analytical line that should not be excited can be prevented from being obtained.

The quantification unit 13 of the X-ray fluorescence spectrometer according to the present embodiment can also obtain contents of the components in the sample 1, 14 by employing a fundamental parameter method that includes overlap correction. In this case, the quantification unit 13 obtains instrument sensitivity constants a, b, c and d and overlap correction coefficients $o_{ij}$, for example, in the aforementioned equation (2) through multiple regression calculation on the basis of measured intensities and known contents of components regarding the standard samples 14, with, in a case of manual setting, whether or not to limit the overlap correction coefficients $o_{ij}$ to negative values being selected, to perform multiple regression calculation.

In the case of manual setting, for example, the message indicating that "positive overlap correction is allowed" is displayed together with a checkbox on the displaying unit 15. In this case, when an operator checks off the checkbox by using an input unit such as a mouse (not shown), selection is performed such that the overlap correction coefficients $o_{ij}$ are not limited to negative values. Meanwhile, in a default state where the checkbox is not checked off, selection is performed such that the overlap correction coefficients $o_{ij}$ are limited to negative values.

Meanwhile, the quantification unit 13 limits, in a case of automatic setting, the overlap correction coefficients to negative values, to perform multiple regression calculation. For example, the message indicating that "variable upper and lower limit values are automatically set" is displayed together with a checkbox on the displaying unit 15. In this case, when an operator checks off the checkbox by using the input unit, automatic setting is made such that the quantification unit 13 limits the overlap correction coefficients $o_{ij}$ to negative values, to perform multiple regression calculation.

In a case where the quantification unit 13 employs the fundamental parameter method that includes overlap correction, the X-ray fluorescence spectrometer according to the present embodiment is as follows. That is, the quantification unit 13 obtains the overlap correction coefficients $o_{ij}$ through multiple regression calculation by appropriately imposing limitation, whereby a physically impossible overlap correction coefficient (positive overlap correction coefficient) that causes an overlap intensity of an interfering line to become negative can be prevented from being obtained.

Although the present invention has been fully described in connection with the preferred embodiment thereof with reference to the accompanying drawing which is used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

1, 14    sample
3        primary X-rays
5        fluorescent X-rays
13       quantification unit
15       displaying unit

**Claims**

1. An X-ray fluorescence spectrometer comprising a quantification unit in which a calibration curve method that involves performing absorption/excitation correction and overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation, wherein

   the quantification unit obtains calibration curve constants, absorption/excitation correction coefficients and overlap correction coefficients through multiple regression calculation on the basis of measured intensities and known contents of components regarding standard samples, with, in a case of manual setting, whether or not to limit the overlap correction coefficients to negative values being selected, and whether or not to limit the absorption/excitation correction coefficients for all correction components to positive values being selected, to perform multiple regression calculation, and, in a case of automatic setting, the overlap correction coefficients being limited to negative values, and the absorption/excitation correction coefficients being such that, in a case where the standard samples do not contain components capable of exciting analytical lines, the absorption/excitation correction coefficients for all the correction components are limited to positive values, theoretical intensities of fluorescent X-rays to be generated from a plurality of samples of which compositions have been assumed are calculated, theoretical matrix correction coefficients are obtained through calculation on the basis of the theoretical intensities, and a numerical value obtained by multiplying each of the theoretical matrix correction coefficients by a predetermined number is, in a case of a positive numerical value, set as an upper limit value of said absorption/excitation correction coefficient or is, in a case of a negative numerical value, set as a lower limit value of said absorption/excitation correction coefficient, to perform multiple regression calculation.

2. An X-ray fluorescence spectrometer comprising a quantification unit in which a fundamental parameter method that includes overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation, wherein
the quantification unit obtains instrument sensitivity constants and overlap correction coefficients through multiple regression calculation on the basis of measured intensities and known contents of components regarding standard samples, with,

in a case of manual setting, whether or not to limit the overlap correction coefficients to negative values being selected, to perform multiple regression calculation, and,
in a case of automatic setting, the overlap correction coefficients being limited to negative values, to perform multiple regression calculation.

Fig. 1

## INTERNATIONAL SEARCH REPORT

<table>
<tr><td>International application No.<br><br>**PCT/JP2024/005271**</td></tr>
</table>

| A. | CLASSIFICATION OF SUBJECT MATTER |
|---|---|

***G01N 23/223***(2006.01)i
FI:　G01N23/223

According to International Patent Classification (IPC) or to both national classification and IPC

| B. | FIELDS SEARCHED |
|---|---|

Minimum documentation searched (classification system followed by classification symbols)

　　　G01N23/00-G01N23/2276

Documentation searched other than minimum documentation to the extent that such documents are included in the fields searched

　　　Published examined utility model applications of Japan 1922-1996
　　　Published unexamined utility model applications of Japan 1971-2024
　　　Registered utility model specifications of Japan 1996-2024
　　　Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2012/039130 A1 (E & M KK) 29 March 2012 (2012-03-29) | 1-2 |
| A | JP 2000-275195 A (RIGAKU INDUSTRIAL CORPORATION) 06 October 2000 (2000-10-06) | 1-2 |
| A | JP 2004-212406 A (RIGAKU INDUSTRIAL CORPORATION) 29 July 2004 (2004-07-29) | 1-2 |
| A | US 2019/0227009 A1 (SHIMADZU CORP.) 25 July 2019 (2019-07-25) | 1-2 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**12 March 2024** | Date of mailing of the international search report<br><br>**26 March 2024** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (July 2022)

**INTERNATIONAL SEARCH REPORT**
Information on patent family members

International application No.

**PCT/JP2024/005271**

| Patent document<br>cited in search report | Publication date<br>(day/month/year) | Patent family member(s) | Publication date<br>(day/month/year) |
|---|---|---|---|
| WO 2012/039130 A1 | 29 March 2012 | (Family: none) | |
| JP 2000-275195 A | 06 October 2000 | (Family: none) | |
| JP 2004-212406 A | 29 July 2004 | (Family: none) | |
| US 2019/0227009 A1 | 25 July 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023027360 A
- JP 2021051053 A
- WO 2018168939 A
- JP 2000065765 A